# EUROPÄISCHE PATENTSCHRIFT

(11) **EP 1 332 080 B1**
(45) Veröffentlichungstag und Bekanntmachung des Hinweises auf die Patenterteilung: **29.06.2005**
(21) Anmeldenummer: 01992664.1
(22) Anmeldetag: 16.10.2001
(51) Int. Cl.: B60T 8/36, F16K 31/06

(54) **ELEKTROMAGNETVENTIL UND VERFAHREN ZUM BETRIEB DES ELEKTROMAGNETVENTILS**
ELECTROMAGNETIC VALVE AND METHOD FOR OPERATING AN ELECTROMAGNETIC VALVE
ELECTROVANNE ET PROCEDE D'UTILISATION DE CETTE ELECTROVANNE

(30) Priorität: 30.10.2000 DE 10053800; 07.04.2001 DE 10117608
(43) Veröffentlichungstag der Anmeldung: 06.08.2003
(73) Patentinhaber: Continental Teves AG & Co. oHG, 60488 Frankfurt (DE)
(72) Erfinder: GOOSSENS, Andre F., L., B-2840 Rumst (BE); TIMMERMANS, Marc, B-1755 Leerbeck (BE)
(86) Internationale Anmeldenummer: PCT/EP2001/011946
(87) Internationale Veröffentlichungsnummer: WO 2002/036402

(56) Entgegenhaltungen:
- WO-A-00/17552
- WO-A-91/14605
- WO-A-95/23717
- DE-A- 2 208 183
- DE-A- 3 534 665
- PATENT ABSTRACTS OF JAPAN vol. 2000, no. 08, 6. Oktober 2000 (2000-10-06) -& JP 2000 142353 A (DENSO CORP), 23. Mai 2000 (2000-05-23)

## Beschreibung

Die Erfindung betrifft ein Elektromagnetventil nach dem Oberbegriff des Anspruchs 1 sowie ein Verfahren zum Betrieb des Elektromagnetventils nach dem Oberbegriff des Anspruchs 7.

Bei einem bekannten Elektromagnetventil (DE 100 07 349 A1) ist zur Verminderung von magnetischen Verlusten die den Magnetanker aufnehmende Hülse möglichst dünnwandig ausgeführt. Dies führt zwangsläufig außer der hydraulischen Beanspruchung zusätzlich zu einer hohen mechanischen Beanspruchung der Hülse in ihrem geschlossenen Endbereich, da am Endbereich der Hülse der Magnetanker bei jeder Ventilbetätigung kontinuierlich anschlägt. Damit ist abgesehen vom Anschlaggeräusch des Magnetankers die Dauerhaltbarkeit und Dünnwandigkeit der Hülse beschränkt.

Aus der gattungsbildenden WO 91/14605 A ist bereits ein als 3/2- Wegeventil konzipiertes Elektromagnetventil bekannt, dessen kugelförmiges Ventilschließglied innerhalb einer Buchse zwischen zwei diametral zueinander ausgerichteten Ventilsitze angeordnet ist. Die Betätigung des Ventilschließgliedes in Richtung der beiden Ventilsitze erfolgt aus entgegengesetzten Richtungen mittels zweier in die Buchse ragender Ventilstößel, die infolge der Wirkung zweier Federn am Ventilschließglied verharren.

Die DE 22 08 183 A zeigt ein als 2/2-Wegeventil konzipiertes Elektromagnetventil, mit aus entgegengesetzten Richtungen auf den Magnetanker sowie auf das Ventilschließglied wirksamen Druckfedern, wobei die am Magnetanker anliegende Druckfeder der Rückstellbewegung des Magnetankers entgegenwirkt.

Aus dem Patent Abstract of Japan, Bd. 2000, Nr. 08, 6. Oktober 2000 (2000-10-06)-& JP 2000 142353 A ist ein als 2/2-Wegeventil konzipiertes Elektromagnetventil bekannt, mit aus entgegengesetzten Richtungen auf den Magnetanker sowie auf den Ventilstößel wirksamen Druckfedern, wobei die am Magnetanker anliegende Druckfeder der Rückstellbewegung des Magnetankers entgegenwirkt.

Es ist die Aufgabe der vorliegenden Erfindung, ein Elektromagnetventil sowie ein Verfahren zum Betrieb des Elektromagnetventils zu schaffen, das unabhängig von Druck- und Temperaturunterschieden der Flüssigkeit vorteilhaft eine nahezu gleichbleibende Schaltcharakteristik aufweist.

Diese Aufgabe wird erfindungsgemäß für ein Elektromagnetventil der angegebenen Art durch die kennzeichnenden Merkmale der Patentansprüche 1 und 7 gelöst.

Weitere Merkmale, Vorteile und Anwendungsmöglichkeiten der Erfindung gehen aus der Beschreibung eines Ausführungsbeispiels hervor.

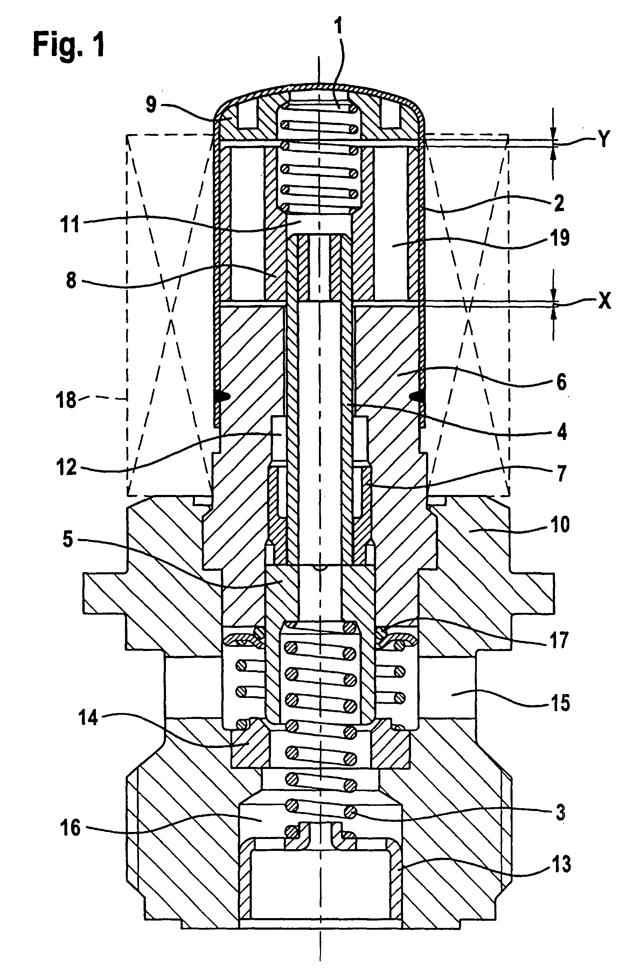

Die Fig. 1 zeigt ein als 2/2-Wege-Sitzventil ausgeführtes Elektromagnetventil in einer Schnittdarstellung. Das Elektromagnetventil weist ein in Patronenbauweise ausgeführtes Ventilgehäuse 10 auf, das fertigungstechnisch vorzugsweise als automatengerechtes Drehteil ausgebildet ist. Im Oberteil des Ventilgehäuses 10 ist ein rohrförmiger Magnetkern 6 eingesetzt, der beispielhaft mittels einer Außenverstemmung des Ventilgehäuses 10 flüssigkeitsdicht im Ventilgehäuse 10 fixiert ist. Auf den Magnetkern 6 ist eine äußerst dünnwandige, vorzugsweise im Tiefziehverfahren hergestellte, im Endbereich topfförmig geschlossene Hülse 2 aufgesetzt, die in ihrem Endbereich eine massive Endscheibe 9 aufnimmt. Der unterhalb der Endscheibe 9 in der Hülse 2 beweglich angeordnete Magnetanker 8 ist mit einem rohrförmigen Ventilstößel 4 verbunden, der vorzugsweise mittels einer Presspassung im Magnetanker 8 fixiert ist. Hierzu weist der zylindrige Magnetanker 8 auf seiner Symmetrieachse eine Stufenbohrung 11 auf, die im Fügebereich des Ventilstößels 4 mit Querrillen, Querriefen oder Gewindegängen versehen ist, wodurch sich eine nahezu konstante Einpresskraft ergibt, die weitgehend unabhängig vom Ist-Maß der Presspassung ist. Zwischen dem Magnetanker 8 und der Endscheibe 9 befindet sich im Magnetankerraum eine Rückstellfeder 1, die zur sicheren Ausrichtung in der Stufenbohrung 11 abschnittsweise geführt ist. An die aus dem Magnetanker 8 und Ventilstößel 4 bestehende Verbindung schließt sich ein gleichfalls rohrförmiges Ventilschließglied 5 an, dessen Außenmantel ebenso wie der Außenmantel des Ventilstößels 4 abschnittsweise in der zentral gelegenen Durchgangsbohrung 12 des Magnetkerns 6 sicher geführt ist. Die Durchgangsbohrung 12 ist hierzu als Stufenbohrung ausgeführt, die im unteren, erweiterten Stufenabschnitt das Ventilschließglied 5 und eine Buchse 7 aufnimmt. Die Buchse 7 ist zur Stößelzentrierung und Führung im Innendurchmesser an den Außendurchmesser des Ventilstößels 4 angepasst. Der Außendurchmesser der Buchse 7 ist hingegen zur Herstellung einer Pressverbindung an den Innendurchmesser im erweiterten Abschnitt der Stufenbohrung 11 angepaßt, wozu die Stufenbohrung 11 mit Rillen, Riefen, Gewindegängen oder dergleichen versehen ist, um die bereits eingangs erwähnte Kontinuität der Einpresskraft sicherzustellen. Die Einpresstiefe der Buchse 7 im Magnetkern 4 ist derart gewählt, dass auf einfache Weise der gewünschte Hub für das Ventilschließglied 5 eingestellt werden kann. Das Ventilschließglied 5 ruht unter der Wirkung einer Ventilfeder 3 in der offenen, elektromagnetisch nicht erregten Position an der Stirnfläche der Buchse 7. Die Ventilfeder 3 ist zweckmäßigerweise mittels eines von unten in die Öffnung des Ventilgehäuses 10 eingepressten Federanschlags 13 vorgespannt und dementsprechend auch einstellbar, wobei die Pressverbindung für den Federanschlag 13 fertigungstechnisch der bereits erläuterten Pressverbindung für die Buchse 7 entspricht. Die im Innendurchmesser abgesetzte Rohrform des Ventilschließgliedes 5 ermöglicht eine sichere, kompakte Aufnahme und Abstützung einzelner Federwindungen der Ventilfeder 3, ohne den Druckausgleich zu behindern. Das vom Ventilschließglied 5 abgewandte Windungsende ist mittels eines Mundstücks am kappenförmigen Federanschlag 13 gleichfalls zentriert, der vorzugsweise mittels Tiefziehen von Dünnblech hergestellt ist. Oberhalb des Federanschlags 13 ist in das Ventilgehäuse 10 ein Ringkörper eingepresst bzw. verstemmt gehalten, der den Ventilsitz 14 in Form eines Kegeldichtsitzes aufnimmt. Das Ventilgehäuse 10 ist auf Höhe des Ventilschließgliedes 5 und damit oberhalb des Ventilsitzes 14 von einem Druckmitteleinlasskanal 15 horizontal durchdrungen, der in der abbildungsgemäßen offenen Ventilschaltstellung mit dem von unten vertikal in das Ventilgehäuse 10 einmündenden Druckmittelauslasskanals 16 verbunden ist.

Das Elektromagnetventil ist in vorliegendem Beispiel hydraulisch durckausgeglichen, wozu am Ventilschließglied 5 ein konzentrischer, federbelasteter Dichtring 17 angeordnet ist, der von unten gegen die Stirnfläche des Magnetkerns 6 gepresst ist. Zur Reduzierung des hydraulischen Widerstands ist der Magnetanker 8 parallel zur Ventilsymmetrieachse von einer Druckausgleichsbohrung 19 durchdrungen. Das in den Druckmittelauslass- bzw. Druckmitteleinlasskanal 16, 15 strömende Druckmittel kann somit ungehindert durch die das Ventilschließglied 5, den Ventilstößel 4 und Magnetanker 8 durchdringende Druckausgleichsbohrung 19 in den Magnetankerraum und damit zum Endbereich der Hülse 2 gelangen, so dass unabhängig von Druck- und Temperaturunterschieden der Flüssigkeit vorteilhaft eine nahezu gleichbleibende Schaltcharakteristik des Elektromagnetventils gewährleistet ist.

Die folgende Beschreibung stellt die Funktionsweise des Elektromagnetventils mit den für die Erfindung wesentlichen Merkmale dar. In der Abbildung nach Fig. 1 befindet sich das Elektromagnetventil in der elektromagnetisch nicht erregten, offenen Grundstellung, in der eine ungehinderte Druckmittelverbindung des Druckmitteleinlasskanals 15 und Druckmittelauslasskanals 16 infolge des vom Ventilsitz 14 abgehobene Ventilschließgliedes 5 gewährleistet ist. In dieser Grundstellung ruht infolge der Wirkung der Ventilfeder 3 die vom Ventilsitz 14 abgewandte Stirnfläche des Ventilschließgliedes 5 an der Stirnseite der Buchse 7. Die Buchse 7 ist derart in der Durchgangsbohrung 12 des Magnetkerns 6 justiert, dass in der offenen Ventilstellung der am Ventilstößel 4 befestigte Magnetanker 8 um wenigstens ein dem Ventilhub X entsprechendes Maß vom Magnetkern 6 entfernt ist. Die vom Magnetkern 6 abgewandte Stirnfläche des Magnetankers 8 ist in der offenen Ventilstellung gleichfalls um einen definierten Axialabstand von der Endscheibe 9 am domförmigen Abschnitt der Hülse 2 entfernt, wodurch der sog. Dämpfungshub Y des Magnetankers 8 ermöglicht wird, um den Magnetanker 8 gemäß der folgenden Funktionsbeschreibung nach der Entmagnetisierung abbremsen zu können, worauf noch ausführlich eingegangen wird.

Zunächst aber, wenn die elektromagnetische Erregung des Ventils erfolgt, entfernt sich das Ventilschließglied 5 durch die Wirkung des Magnetankers 8 und des Ventilstößels 4 von der Buchse 7 und gelangt am Ventilsitz 14 zur Anlage. Während dieses Vorgangs entspannt sich die Rückstellfeder 1 zwangsläufig und die Ventilfeder 3 ist demgegenüber proportional zum Ventilhub X vorgespannt, bis nach dem Abschalten der elektromagnetischen Erregung das Magnetfeld der Magnetspule 18 zusammenbricht (Entmagnetisierung). Dann wird die gegenüber der Rückstellfeder 1 steifere Ventilfeder 3 im Ventilöffnungssinn wirksam, die das Ventilschließglied 5, den Ventilstößel 4 und den Magnetanker 8 entgegen der Wirkung der zunächst schwachen Rückstellfeder 1 in Richtung der Endscheibe 9 beschleunigt. Diese Beschleunigung der aus dem Ventilschließglied 5, dem Ventilstößel 4 und dem Magnetanker 8 bestehenden Gesamtmasse findet vorteilhaft nur so lange statt, bis das Ventilschließglied 5 zur Anlage an der Buchse 7 gelangt, so dass die ursprünglich auf den Ventilstößel 4 und den Magnetanker 8 wirksame Kraft der Ventilfeder 3 nur noch auf das an der Buchse 7 zur Ruhe gekommene Ventilschließglied 5 wirkt. Folglich bewegt sich dann lediglich die um die Masse des Ventilschließgliedes 5 reduzierten Magnetanker- und Ventilstößelmasse aufgrund ihrer Massenträgheit entgegen der hubproportional ansteigenden Kraft der Rückstellfeder 1 in Richtung der Endscheibe 9 weiter. Mit zunehmender Kompression der Rückstellfeder 1 und unter Berücksichtigung der viskosen Dämpfung des im Magnetankerraum befindlichen Druckmittels, erfährt der Magnetanker 8 und der Ventilstößel 4 während des Dämpfungshubs Y eine Abbremsung bis zum Stillstand kurz vor der Endscheibe 9 oder unter extrem ungünstigen Bedingungen (Trockenlauf, verschäumte Flüssigkeit) direkt an der Endscheibe 9, mit einer sich daran anschließenden, durch die Rückstellfeder 1 initiierten Umkehrung der Bewegungsrichtung des Magnetankers 8 und Ventilstößels 4 zurück in die abbildungsgemäße Ruhelage, in der der Ventilstößel 4 wieder am Ventilschließglied 5 anliegt.

Durch die vorbeschriebenen Einzelheiten des Elektromagnetventils wird deutlich, dass durch die gezielte Abbremsung aller beschleunigten Massen vorteilhaft nicht nur ein erheblicher Beitrag zur Reduzierung der Ventilgeräusche geleistet wird, sondern auch die mechanische Beanspruchung der Hülse erheblich reduziert wird. In der Konsequenz lassen sich kleinste Hülsenwandstärken realisieren, die sich günstig im Sinne einer kleinstmöglichen Reduktanz des Magnetkreises auswirken. Ferner ist durch die vorgeschlagene Ventilkonstruktion ein für die Großserienfertigung einfach zu realisierender Magnetventilaufbau möglich, der insbesondere eine hochgenaue Fertigung und Einjustierung des Ventilhubs X ermöglicht, wozu auf die Anordnung und auf das eingangs erwähnte Fügeverfahren für die Buchse 7 beispielhaft hingewiesen wird. Vorteilhaft zu erwähnen ist schließlich die Tatsache, dass durch den frei wählbaren Dämpfungshub Y die von der Betriebstemperatur des Druckmittels stark abhängige viskose Dämpfungscharakteristik vermieden werden kann.

### Bezugszeichenliste

- 1: Rückstellfeder
- 2: Hülse
- 3: Ventilfeder
- 4: Ventilstößel
- 5: Ventilschließglied
- 6: Magnetkern
- 7: Buchse
- 8: Magnetanker
- 9: Endscheibe
- 10: Ventilgehäuse
- 11: Stufenbohrung
- 12: Durchgangsbohrung
- 13: Federanschlag
- 14: Ventilsitz
- 15: Druckmitteleinlasskanal
- 16: Druckmittelauslasskanal
- 17: Dichtring
- 18: Magnetspule
- 19: Druckausgleichsbohrung

## Patentansprüche

1. Elektromagnetventil, mit einem Ventilgehäuse (10), das ein mit einem Ventilstößel (4) zusammenwirkendes Ventilschließglied (5) und einen Magnetanker (8) aufnimmt, wobei das Ventilschließglied (5) an einem Ventilsitz (14) sowie der Magnetanker (8) an einem Magnetkern (6) anlegbar sind, mit einer am Magnetkern (6) gehaltenen Hülse (2), in der der Magnetanker (8) axial beweglich geführt ist, sowie mit einer am Umfang der Hülse (2) angeordneten Magnetspule (18) zwecks Erregung des Magnetankers (8) in eine Schaltstellung, in der das Ventilschließglied (5) entgegen der Wirkung einer Ventilfeder (3) die Druckmittelverbindung zwischen wenigstens einem Druckmitteleinlasskanal (15) und einem Druckmittelauslasskanal (16) im Ventilgehäuse zu sperren vermag, wobei eine Rückstellfeder (1) in der Hülse (2) angeordnet ist, die nach Beendigung der elektromagnetischen Erregung, in der sich das Ventilschließglied (5) unter der Wirkung der Ventilfeder (3) vom Ventilsitz (14) entfernt, eine Abbremsung des Magnetankers (8) bewirkt, **dadurch gekennzeichnet, dass** das Elektromagnetventil hydraulisch druckausgeglichen ist, wozu das in einer Durchgangsbohrung (12) des Magnetkerns (6) geführte Ventilschließglied (5) mittels eines Dichtrings (17) an seinem Außenumfang gegenüber der Durchgangsbohrung (12) gedichtet ist und dass das Ventilschließglied (5), der Magnetanker (8) und der Ventilstößel (4) rohrförmig gestaltet sind und eine Druckausgleichsbohrung aufweisen, welche in einen die Rückstellfeder (1) aufweisenden Magnetankerraum einmündet.

2. Elektromagnetventil nach Anspruch 1, **dadurch gekennzeichnet, dass** der Ventilstößel (4) in der nicht erregten offenen Ventilschaltstellung so lange vom Ventilschließglied (5) entfernt ist, bis durch die Rückstellfeder (1) der Ventilstößel (4) wieder am Ventilschließglied (5) anliegt.

3. Elektromagnetventil nach Anspruch 1 oder 2, **dadurch gekennzeichnet, dass** mittels der gegenüber der Rückstellfeder (1) stärkeren Ventilfeder (3) das Ventilschließglied (5) in einer nicht erregten, offenen Ventilschaltstellung an einer im Magnetkern (6) eingesetzten Buchse (7) anliegt, durch die sich der Ventilstößel (4) auf das Ventilschließglied (5) erstreckt.

4. Elektromagnetventil nach Anspruch 1, **dadurch gekennzeichnet, dass** der Magnetanker (8) in der elektromagnetisch nicht erregten, offenen Ventilschaltstellung vom geschlossenen, die Rückstellfeder (1) aufweisenden Endbereich der Hülse (2) beabstandet ist.

5. Elektromagnetventil nach einem der vorhergehenden Ansprüche, **dadurch gekennzeichnet, dass** die Rückstellfeder (1) zwischen dem Magnetanker (8) und einer im Endbereich der Hülse (2) zugeordneten Endscheibe (9) eingespannt ist, die an die Innenkontur der Hülse (2) angepasst ist.

6. Elektromagnetventil nach Anspruch 5, **dadurch gekennzeichnet, dass** in der offenen Ventilstellung zwischen der Endscheibe (9) und dem Magnetanker (8) ein Axialabstand (Y) vorhanden ist, welcher der maximalen Verzögerungsstrecke des Magnetankers (8) nach der Entmagnetisierung und Beschleunigung des Magnetankers (8) durch die Ventilfeder (3) in Richtung der offenen Ventilschaltstellung entspricht.

7. Verfahren zum Betrieb eines Elektromagnetventils nach einem der vorangegangenen Ansprüche, **dadurch gekennzeichnet, dass** nach Abschluss der elektromagnetischen Erregung:
a) das Ventilschließglied (5) früher als der Ventilstößel (4) zum Stillstand kommt, so dass der Ventilstößel (4) vom Ventilschließglied (5) abhebt,
b) der Magnetanker (8) in Richtung dem Ende der Hülse (2) durch die Rückstellfeder (1) abgebremst wird, vor dem Hülsenende zum Stillstand kommt und anschließend seine Bewegungsrichtung umkehrt, um wieder zur Anlage am Ventilschließglied (5) zu gelangen.

## Claims

1. Electromagnetic valve with a valve housing (10) accommodating a valve closure member (5) that cooperates with a valve tappet (4) and a magnet armature (8), wherein the valve closure member (5) is movable into abutment on a valve seat (14) and the magnet armature (8) is movable into abutment on a magnet core (6), including a sleeve (2) retained at the magnet core (6) in which the magnet armature (8) is axially movably guided, as well as a magnet coil (18) arranged at the periphery of the sleeve (2) for the purpose of energizing the magnet armature (8) to adopt a switching position in which the valve closure member (5) is able to close the pressure medium connection between at least one pressure medium inlet channel (15) and one pressure medium outlet channel (16) in the valve housing in opposition to the effect of a valve spring (3), wherein a resetting spring (1) is arranged in the sleeve (2) and effects slowing down of the magnet armature (8) after termination of the electromagnetic energization in which the valve closure member (5) moves away from the valve seat (14) by the effect of the valve spring (3),
**characterized in that** the electromagnetic valve is hydraulically pressure-balanced, to what end the valve closure member (5) guided in a through-bore (12) of the magnet core (6) is sealed at its outside periphery with respect to the through-bore (12) by means of a sealing ring (17), and **in that** the valve closure member (5), the magnet armature (8) and the valve tappet (4) have a tubular design and include a pressure-compensating bore that opens into a magnet armature chamber accommodating the resetting spring (1).

2. Electromagnetic valve as claimed in claim 1,
**characterized in that** in the non-energized open valve switching position, the valve tappet (4) is spaced from the valve closure member (5) until the valve tappet (4) abuts on the valve closure member (5) again by the action of the resetting spring (1).

3. Electromagnetic valve as claimed in claim 1 or 2,
**characterized in that** by means of the valve spring (3) that is stronger compared to the resetting spring (1), the valve closure member (5) abuts on a bush (7) inserted in the magnet core (6) in a non-energized, open valve switching position, through which bush the valve tappet (4) extends towards the valve closure member (5).

4. Electromagnetic valve as claimed in claim 1,
**characterized in that** the magnet armature (8) in the electromagnetically non-energized, open valve switching position is spaced from the closed end area of the sleeve (2) that includes the resetting spring (1).

5. Electromagnetic valve as claimed in any one of the preceding claims,
**characterized in that** the resetting spring (1) is compressed between the magnet armature (8) and an end plate (9) arranged in the end area of the sleeve (2) and conformed to the inside contour of the sleeve (2).

6. Electromagnetic valve as claimed in claim 5,
**characterized in that** in the open valve position, an axial distance (Y) is provided between the end plate (9) and the magnet armature (8) which corresponds to the maximum deceleration distance of the magnet armature (8) after the demagnetization and acceleration of the magnet armature (8) by the valve spring (3) in the direction of the open valve switch position.

7. Method of operating an electromagnetic valve as claimed in any one of the preceding claims,
**characterized in that** after the termination of the electromagnetic energization:
a) the valve closure member (5) comes to a standstill earlier than the valve tappet (4) so that the valve tappet (4) lifts from the valve closure member (5),
b) the magnet armature (8) is slowed down by the resetting spring (1) in the direction of the end of sleeve (2), comes to a standstill before the sleeve's end and subsequently reverses its direction of movement to reassume abutment on the valve closure member (5).

## Revendications

1. Electrovanne, comprenant un boîtier de vanne (10), recevant un opercule de vanne (5) coopérant avec un poussoir de vanne (4) et un induit magnétique (8), l'opercule de vanne (5) étant susceptible d'être appliqué sur un siège de vanne (14), ainsi que l'induit magnétique (8) sur un noyau magnétique (6), avec une douille (2) maintenue sur le noyau magnétique (6), douille dans laquelle l'induit magnétique (8) est guidé de façon mobile axialement, ainsi qu'avec une bobine magnétique (18) disposée sur la périphérie de la douille (2), dans le but d'exciter l'induit magnétique (8) dans une position de commutation à laquelle l'opercule de vanne (5) peut bloquer, à l'encontre de l'effet d'un ressort de vanne (3), la liaison de fluide sous pression entre au moins un canal d'admission de fluide sous pression (15) et un canal d'évacuation de fluide sous pression (16) réalisés dans le boîtier de vanne, dans la douille (2) étant disposé un ressort de rappel (1) qui, après achèvement de l'excitation électromagnétique, lorsque l'opercule de vanne (5) s'éloigne du siège de vanne (14) sous l'effet du ressort de vanne (3), provoque un freinage de l'induit magnétique (8), **caractérisée en ce que** l'électrovanne est à compensation de pression hydraulique, ce pourquoi, l'opercule de vanne (5), guidé dans un perçage traversant (12) du noyau magnétique (6), est isolé de façon étanche par rapport au perçage traversant (12) au moyen d'une bague d'étanchéité (17) montée sur sa périphérie extérieure, et **en ce que** l'opercule de vanne (5), l'induit magnétique (8) et le poussoir de vanne (4) sont de configuration tubulaire et présentent un perçage d'équilibrage de pression débouchant dans un espace d'induit magnétique, présentant le ressort de rappel (1).

2. Electrovanne selon la revendication 1, **caractérisée en ce que**, à la position de commutation de vanne ouverte non excitée, le poussoir de vanne (4) est éloigné de l'opercule de vanne (5), jusqu'à ce que le poussoir de vanne (4) revienne en appui sur l'opercule de vanne (5), sous l'action du ressort de rappel (1).

3. Electrovanne selon la revendication 1 ou 2, **caractérisée en ce que**, au moyen du ressort de vanne (3), de force supérieure à celle du ressort de rappel (1), l'opercule de vanne (5), lorsqu'il est en position de commutation de vanne ouverte, non excitée, est placé en appui sur un manchon (7) inséré dans le noyau magnétique (6), manchon à travers lequel s'étend le poussoir de vanne (4) monté sur l'opercule de vanne (5).

4. Electrovanne selon la revendication 1, **caractérisée en ce que**, à la position de commutation de vanne ouverte, non excitée électromagnétiquement, l'induit magnétique (8) est à distance de la zone d'extrémité fermée, présentant le ressort de rappel (1), de la douille (2).

5. Electrovanne selon l'une des revendications précédentes, **caractérisée en ce que** le ressort de rappel (1) est enserré entre l'induit magnétique (8) et une rondelle d'extrémité (9), associée dans la zone d'extrémité de la douille (2), la rondelle d'extrémité étant adaptée au contour intérieur de la douille (2).

6. Electrovanne selon la revendication 5, **caractérisée en ce que**, à la position de vanne ouverte, entre la rondelle d'extrémité (9) et l'induit magnétique (8), est prévu un espacement axial (Y), correspondant à la distance de ralentissement maximale de l'induit magnétique (8) après démagnétisation et accélération de l'induit magnétique (8) au moyen du ressort de vanne (3), dans la direction de la position de commutation en position ouverte de la vanne.

7. Procédé de fonctionnement d'une électrovanne selon l'une des revendications précédentes, **caractérisée en ce que**, après achèvement de l'excitation magnétique :
a) l'opercule de vanne (5) s'immobilise plus tôt que le poussoir de vanne (4), de sorte que le poussoir de vanne (4) se dégage de l'opercule de vanne (5),
b) l'induit magnétique (8) est freiné en direction de l'extrémité de la douille (2), au moyen du ressort de rappel (1), s'immobilise devant l'extrémité de la douille et inverse ensuite son sens de déplacement, pour se placer de nouveau en appui sur l'opercule de vanne (5).
